# EUROPEAN PATENT APPLICATION

(11) **EP 4 752 114 A1**
(43) Date of publication of application: **03.06.2026**
(21) Application number: 24307006.7
(22) Date of filing: 02.12.2024
(51) Int. Cl.: C03B 35/26, C03B 40/00

(54) **ROLLER SWEEP AND SWEEP PAD SUPPORT FOR A GLASS FORMING MACHINE**

(71) Applicant: Becton Dickinson France, 38800 Le Pont-de-Claix (FR)
(72) Inventor: PINSON, Nicolas, 38170 Seyssinet-Pariset (FR); BRUNEL, Julien, 38760 Varces (FR)
(74) Representative: Germain Maureau

(57) **Abstract**

The invention relates to a roller sweep (30) for a glass forming machine (10), wherein the roller sweep comprises a sweep pad support (32) for a roller sweep (30) for a glass forming machine (10), wherein the sweep pad support (32) comprises a wedge (34) having an upper apex ridge (36) extending along a longitudinal direction in a median longitudinal plane (P36) of the wedge (34), wherein the wedge (32 ) further comprises two lower longitudinal side edges (38, 39) which extend parallel to the upper apex ridge (36), each on one side of median longitudinal plane (P36), and wherein the sweep pad support (32) comprises pad fasteners (60, 62) for attaching a sweep pad (28) straddling the wedge (34) on both sides of the upper apex ridge (36).

## Description

### Technical Domain

The invention relates to the field of glass forming machinery for forming tubular glass articles from tubular glass blanks, especially for forming tubular glass containers for medical drugs, such as vials or syringes.

### Prior art

A typical glass forming machine for forming tubular glass articles from tubular glass blanks may comprises a series of successive blank support stations aligned along a blank transfer direction. A transfer mechanism may be provided to transfer the glass blanks at discrete time intervals from one blank support station to the next blank support station along the blank transfer direction through the machine. At each blank support station, a tubular glass blank may be rotatably supported around its own axis by being simultaneously supported by two parallel support rollers of the blank support station. Each of the two parallel support rollers exhibits its own roller axis, such that the two roller axis of the two parallel support rollers are perpendicular to the transfer direction and are spaced apart along a direction parallel to the blank transfer direction.

In such machine, the movement of the tubular glass blanks is thus discontinuous and sequential, each tubular glass blank being thus immobilized, along the blank transfer direction, at a given blank support station for a predetermined amount of time.

In a machine comprising a series of successive blank support stations, the machine comprises a series of support rollers aligned along the blank transfer direction. At a blank supporting station comprising two successive support rollers of the series of support rollers, the tubular glass blank lies against both support rollers on a top side of an axis plane containing both axis of the support rollers.

At a given blank support station, a tubular glass blanks received at that station may be subject to a forming step of the forming process.

At a given blank support station, the rotation of the tubular glass blank is preferably synchronous with the rotation of the support rollers such that no friction occurs at the contact between the tubular glass blank and the support rollers. In other words, the rotation of the tubular glass blank is obtained by a no-slip rolling relative movement of the tubular glass blank on each of the support rollers of the roller station, to avoid damaging or marking the external surface of the tubular glass blank.

Despite such a no-slip rolling relative movement, it has appeared that the contact between the support roller and the tubular glass blank may result in some marking of the outer surface of the tubular glass blank. It has been determined that such marking may result for example from some vibration of at least one of the support rollers, and/or from the presence of residue and/or dust which may accumulate on the contact surface of the support roller with the tubular blank.

One object of the invention is thus the provide a solution to reduce the risk of a tubular glass blank being marked in some way at a given blank support station, in order to enhance the chances of obtaining a defect-free tubular glass article.

### Summary

It is herein disclosed a sweep pad support for a roller sweep for a glass forming machine, wherein the sweep pad support comprises a wedge having an upper apex ridge extending along a longitudinal direction in a median longitudinal plane of the wedge, wherein the wedge further comprises two lower longitudinal side edges which extend parallel to the upper apex ridge, each on one side of median longitudinal plane, and wherein the sweep pad support comprises pad fasteners for attaching a sweep pad straddling the wedge on both sides of the upper apex ridge.

In some embodiments, the two lower side edges are spaced apart from the upper apex ridge along the principal extension direction and spaced apart from each other along a transvers direction perpendicular to median longitudinal plane.

In some embodiments, the wedge comprises two concave side panels extending each between the upper apex ridge and a respective one of the lower side edges.

In some embodiments, the two side panels form a top surface of the wedge, where such top surface has an inverted V-shape-profile in any plane perpendicular to the longitudinal direction of the upper apex ridge, wherein the inverted V-shape-profile of the top surface of the wedge has concave sides formed by the two side panels, wherein each of said concave side panels exhibits a ruled surface, with all its generatrices extending parallel to the longitudinal direction of the upper apex ridge.

In some embodiments, each concave side panel exhibits, perpendicularly to its generatrices, a section which extends along an angular portion of a circular cylinder, the axis of which being away from the wedge in a top facing direction.

In some embodiments, the pad fasteners comprise a first pad fastener for attaching the sweep pad at a first one of the two lower side edges of the wedge, and a second pad fastener for attaching the sweep pad at a second one of the two lower side edges of the wedge.

In some embodiments, the pad fasteners comprise at least one tensioning pad fastener for tensioning the sweep pad around the upper apex ridge and around the two lower side edges of the wedge.

In some embodiments, the tensioning pad fastener comprises a rotating presser pad, which is rotatable with respect to the wedge around a longitudinal rotation axis, externally around a corresponding one of the two lower side edges of the wedge which exhibits a rounded external surface having a convex curved cross-section around the longitudinal rotation axis.

In some embodiments, the convex curved cross-section of the rounded external surface of the corresponding one of the two lower side edges of the wedge is off-centered with respect to the longitudinal rotation axis of the rotating presser pad, defining a diminishing radial gap between the rotating presser pad and the rounded external surface of the corresponding one of the two lower side edges of the wedge when the rotating presser pad rotates from a start position to an end position.

In some embodiments, the rounded external surface of the corresponding one of the two lower side edges of the wedge is a circular or non-circular cylindrical surface.

In some embodiments, the sweep pad support comprises a base, wherein the wedge is moveably connected to the base so as to be moveable with respect to the base along at least a principal extension direction perpendicular to the longitudinal direction in the median plane, and wherein the wedge is spring biased away from the base towards an extended position along the principal extension direction.

In some embodiments, the extended position of the wedge with respect to the base is determined by a stop.

In some embodiments, the wedge is connected to the base by a slide connection along the principal extension direction.

In some embodiments, the base comprises a mount portion for rigidly securing the sweep pad support to a glass forming machine.

In some embodiments, the mount portion comprises a magnet for rigidly securing the sweep pad support to a glass forming machine.

Also disclosed is a roller sweep for a glass forming machine, wherein the roller sweep comprises a sweep pad support having any of features above, and wherein a textile sweep pad is attached to the sweep pad support, straddling the wedge on both sides of the upper apex ridge.

In some embodiments, the sweep pad support is configured such that the sweep pad simultaneously contacts two parallel support rollers in a glass forming machine.

A roller sweep and a sweep pad support having any of features above may be used in a glass forming machine for forming tubular glass articles from tubular glass blanks, wherein the machine comprises at least one blank support station at which a tubular glass blank may be rotatably supported around its own axis by being simultaneously supported by two parallel support rollers, wherein each of the two parallel support rollers exhibits its own roller axis, such that the two roller axis of the two parallel support rollers are perpendicular to a transfer direction and are spaced apart along a direction parallel to the blank transfer direction, wherein each support roller is rotatable around its roller axis, wherein at the blank supporting station, the tubular glass blank lies against both support rollers on a top side of an axis plane containing both axis of the support rollers,

Such a glass forming machine may comprise, at said at least one support station, a sweep pad comprising a textile pad which simultaneously contacts the two parallel support rollers on a bottom side of the axis plane.

In some embodiments, a given support roller of a blank supporting station comprises at least two distinct roller discs which are distinct and spaced apart along the direction of the roller axis, where each roller disc of said given support roller exhibits an outer surface, circular around the roller axis, which supports the tubular glass blank at the blank supporting station, and wherein the sweep pad simultaneously contacts the two rollers discs on a bottom side of the axis plane.

In some embodiments, the wedge of the roller sweep has two concave side panels extending each between the upper apex ridge and a respective one of two lower side edges of the wedge, wherein each of said concave panels faces a respective one of the two support rollers, and wherein each of said concave side panels exhibits a ruled surface, the generatrices of which extend parallel to the roller axis.

In some embodiments, the two concave side panels of the wedge of the roller sweep have a circular profile centered on the corresponding roller axis.

In some embodiments, in the extended position of the wedge with respect to the base of the roller sweep, a radial gap is maintained between the concave side panels of the wedge and the support rollers, the radial gap being less than a load free-thickness of the sweep pad.

In some embodiments, the roller sweep is rigidly secured to a chassis member of the glass forming machine.

In some embodiments, the machine comprises a series of successive blank support stations aligned along a blank transfer direction, wherein the machine comprises a series of support rollers aligned along the blank transfer direction, wherein each support roller has a roller axis such that two consecutive roller axis of the two parallel support rollers are spaced apart along a direction parallel to a blank transfer direction, wherein each support roller is rotatable around its roller axis, wherein at a blank supporting station comprising two successive support rollers of the series of support rollers, the tubular glass blank lies against both support rollers on a top side of an axis plane containing both axis of the support rollers. In some embodiments, the glass forming machine comprises, at said support station, a sweep pad comprising a textile pad which simultaneously contacts the two parallel support rollers on a bottom side of the axis plane.

### Description of the drawings

[Fig. 1]: Figure 1 is a partial and simplified perspective view of an example of a glass forming machine for forming tubular glass articles from tubular glass blanks, comprising several blank support stations.
[Fig. 2]: Figure 2 is a partial and further simplified perspective view of a glass forming machine, showing a roller sweep located at a blank support station.
[Fig. 3]: Figure 3 is a similar view to that of Figure 2, along different viewing angle.
[Fig. 4]: Figure 4 is a simplified front view of a roller sweep located at a blank support station.
[Fig. 5]: Figure 5 is a perspective view, from the top, of an example of a roller sweep comprising a sweep pad support and, shown partially and in dotted lines, a sweep pad.
[Fig. 6]: Figure 6 is a perspective view, from the bottom, of the sweep pad support of Figure 5.
[Fig. 7]: Figure 7 is a perspective exploded view of the sweep pad support of Figure 5.
[Fig. 8]: Figure 8 is a perspective cutout view of the sweep pad support of Figure 5.
[Fig. 9]: Figure 9 is a side view of the sweep pad support of Figure 5, showing a tensioning pad fastener having a rotating presser pad in a radially inner position.
[Fig. 10]: Figure 10 is a view similar to that of Figure 9, showing the rotating presser pad in radially outer position.
[Fig. 11]: Figure 11 is a front view of a portion of the wedge of the sweep pad support of Figure 5.
[Fig. 12]: Figure 12 is a detailed portion of Figure 11, showing an example of the geometry of a rounded external surface of a lower side edge of the wedge of Figure 11.
[Fig. 13]: Figure 13 is a front cutout view of some elements of the roller sweep of Figure 5 in an end position of a tensioning pad fastener.
[Figs. 14-16]: Figures 14 to 16 are views similar to that of Figure 13, showing respectively a start position and two intermediate positions of the tensioning pad fastener.

### Detailed description

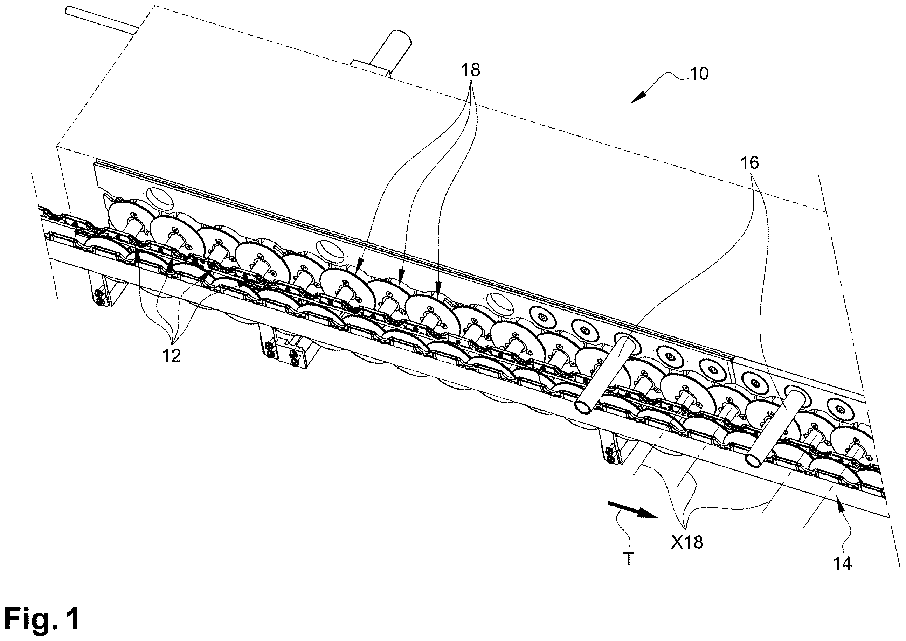

Figure 1 illustrates an example of a glass forming machine 10 for forming tubular glass articles from tubular glass blanks 16. In the example, such machine 10 is for forming tubular glass containers for medical drugs, such as syringe barrels. Such machines are well-known in the industry.

The machine 10 comprises a series of successive blank support stations 12 aligned along a blank transfer direction T. For the easiness of understanding of the following description, it will be assumed that the blank transferred direction T is rectilinear and more particularly horizontal. However, the use of such term and example should not be considered as limiting with respect to the scope of the invention. Also for the ease of comprehension, only two tubular glass blanks 16 are shown on Figure 1, each being received at spaced apart blank support stations 12.

A transfer mechanism may be provided to transfer the tubular glass blanks 16 at discrete time intervals from one blank support station 12 to the next blank support station 12 along the blank transfer direction T through the machine 10. For example, the transfer mechanism may comprise a walking beam conveyor 14.

Each blank support station 12 comprises a pair of support rollers 18, each support roller 18 having its own axis X18. The axis X18 of each support roller 18 is preferably perpendicular to the blank transfer direction T. The two roller axis X18 of the two parallel support rollers 18 of a given support station 12 are thus perpendicular to the transfer direction T and are spaced apart along a direction parallel to the blank transfer direction T. In the example, the axis X18 of each support roller 18 is horizontal. Each support roller 18 is rotatable around its roller axis X18.

At each blank support station 12, a tubular glass blank 16 may be rotatably supported around its own axis X16 by being simultaneously supported by the two parallel support rollers 18 of the blank support station 12. In such a configuration, the axis X16 of a given tubular glass blank is parallel to the roller axis X18 of the two support rollers 18 on which it is supported. In such a configuration, the longitudinal axis X16 of the tubular glass blank 16 is located, in orthogonal projection on the blank transfer direction T, between the respective roller axis X18 of the two support rollers 18 on which it is supported. In the example, the axis X16 of a given tubular blank is horizontal.

In the example of a machine 10 which is depicted on the figures, a given support roller 18 of a blank supporting station 12 comprises at least two distinct roller discs 20, 22, which are distinct and spaced apart along the direction of the roller axis X18. For example, each support roller 18 comprises a front roller disc 20 and a back roller disc 22, the denominations front and back being arbitrary in this description.

Each roller disc 20, 22 of said given support roller 18 exhibits an outer surface 24, which is circular around the roller axis X18, and which supports the tubular glass blank 16 at the blank supporting station 12. In such example, the outer surfaces 24 of both roller discs 20, 22 of a given support roller 18 form, together, an outer surface of that support roller 18.

In the example shown on the figures, both roller discs 20, 22 of the given support roller 18 have a same diameter determined as the diameter of their respective outer surfaces 24. Such a support roller 18 is thus well adapted for supporting a tubular glass blank 16 having a tubular shape of constant diameter along the length of its axis X16. However, in some cases, the two support rollers 18 of a given support station 12 may have a varying diameter along the length of their respective axis X18. In such case, where the support roller 18 would also comprise a pair of front and back roller discs 20, 22, the front and back roller discs 20, 22 would be of different diameter.

The front and back roller discs 20, 22 of a given support roller 18 may be rigidly connected one to the other by a roller shaft 21, which preferably has a smaller diameter than the front and back roller discs 20, 22, and which thus does not come into contact with the tubular glass blank 16 supported by the support roller 18. The front and back roller discs 20, 22 of a given support roller 18 have a same angular speed of rotation around their common roller axis X18. Is to be noted that, in some embodiments, a given support roller 18 may be formed by more than two roller discs spaced apart along the roller axis X18 of that given support roller 18, each roller disc having a circular outer surface in contact with the tubular glass blank 16 supported by the given support roller 18.

One advantage of having a given support roller 18 formed by two distinct and axially spaced apart roller discs 20, 22 is that that the roller discs 20, 22 of that support roller 18 may be axially offset with the respect to the outer surface 24 of the other support roller 18 of the same blank support station 12. Thereby, the distance between the roller axis X18 of the two support rollers 18 of a given blank support station 12 may be inferior to the sum of the respective radiuses of these two support rollers 18. In the case of support rollers 18 of a given blank support station 12 having the same diameter, the distance between the two roller axis X18 of the two support rollers of that given blank support station 12 may be inferior to the diameter of each of the two support rollers 18. In other words, the distance between the two roller axis X18 corresponding to the two front roller discs 20 of the given blank support station 12 may be inferior to the diameter of each of those two front roller discs 20. Similarly, the distance between the two roller axis X18 corresponding to the two back roller discs 22 of the given blank support station 12 may be inferior to the diameter of each of the two back roller discs 22. In the shown example, the front roller discs 20 of a series of successive support rollers 18 are alternatively offset to the front or to the back, along the direction of their respective roller axis X18, with respect to the immediately successive front roller disc 20. Thereby, two immediately successive front roller discs 20 along the blank transfer direction T may overlap radially. Similarly, the back roller discs 22 of a series of successive support rollers are alternatively offset to the front or to the back, along the direction of their respective roller axis X18, with respect to the immediately successive back roller discs 22, and two immediately successive back roller discs 22 may overlap radially.

In order for the two parallel support rollers 18 of a given blank support station 12 to be able to support a given tubular glass blank 16, where the roller axis X18 of the two support rollers 18 and the axis X16 of the tubular glass blank 16 are parallel, it is well-known in the art that it is necessary that the distance between the two roller axis X18 is inferior to the sum of the radiuses of the two support rollers 18 and of the diameter of the tubular glass blank 16. Such is the case in the machine 10 described in figures where that distance is inferior to the sum of the radiuses of the two support rollers 18. On the other hand, as well-known in the art, the distance between the two roller axis X18 should be large enough for the two rollers 18 to form, when viewed along the axial direction of the axis X16 of the tubular glass blank 16, a V-shape-profile space where a bottom portion of a section of the tubular glass blank may be received, such that the outer surface of the tubular glass blank 16 comes into stable contact with both support rollers 18, symmetrically with respect to a center of the V-shape-profile space along the blank transfer direction T.

At a blank supporting station 12 comprising two successive support rollers 18 of the series of support rollers 18, the tubular glass blank 16 lies against both support rollers 18 on a top side of the axis plane P18 containing both roller axis X18 of the support rollers 18. The top side of the axis plane P18 is, in this example, the top side along the vertical direction perpendicular to the horizontal direction of the blank transfer direction T. However, such orientation is illustrative and not limiting. Nevertheless, in an arrangement where the blank transfer direction T is horizontal or only moderately inclined with respect to horizontal, a tubular blank 16 may lie against both support rollers 18 by the mere action of gravity.

In the machine 10 according to the example, two successive blank support stations 12 may share a common support roller 18. In other words, a given support roller 18 may belong to two successive blank support stations 12.

At a given blank support station 12, a tubular glass blank received at that station may be subject to a forming step of the forming process.

At a given blank support station 12, the tubular glass blank 16 may be rotated around its own axis X16. Such rotation may be imparted to the blank 16 by an external actuator acting directly on the tubular glass blank 16, or, preferably, may be imparted by at least one of the support rollers 18 of the blank support station 12. In such a case, at least one support roller 18, or both of said support rollers 18 of a given blank support station 12, may be driven in rotation around its own axis X18, for example by an actuator, possibly via a transmission such as a chain transmission and/or a pinion gear transmission. In any case, the rotation of the tubular glass blank 16 is preferably synchronous with the rotation of both of the support rollers 18 of the support station 12 such that no friction, or very little friction, occurs at the contact between the tubular glass blank 16 and the support rollers 18 on which it is supported. In other words, the rotation of the tubular glass blank 16 is preferably obtained with a no-slip rolling relative movement of the tubular glass blank 16 on each of the support rollers 18 of the blank support station 12. The two parallel support rollers 18 of a given blank support station have a same direction of rotation around their respective axis X18, and a same angular speed of rotation if they are of the same diameter. The two parallel support rollers 18 of a given blank support station 12 have a direction of rotation which is inverse to the direction of rotation of the tubular glass blank 16 around its own axis X16.

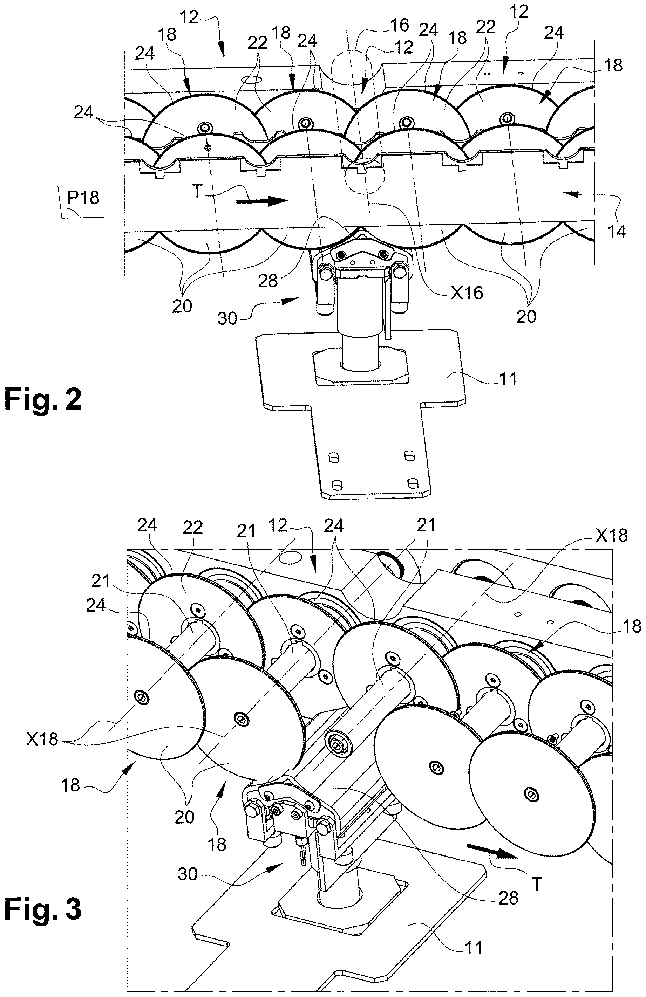

As shown in Figures 2, 3 and 4, the glass forming machine 10 may advantageously comprise, at at least one support station 12, a sweep pad 28 which simultaneously contacts the two parallel support rollers 18 on a bottom side of the axis plane P18. Preferably, the sweep pad 28 comprises a textile pad.

Such sweep pad 28 thus comes into contact with the outer surface 24 of both support rollers 18 of the blank support station 12 during the use of the machine 10. In the example, the sweep pad 28 thus comes into contact with the outer surface 24 of the front and back roller discs 20, 22 of both support rollers 18 of the blank support station 12, at a time when the support rollers 18 have a rotating movement around their respective axis X18.

As will be seen hereunder, the sweep pad 28 is preferably fixed with respect to a chassis element 11 of the machine 10. As a consequence, due to the rotation of the support rollers 18, the entire circumference of the outer surface 24 of both support rollers 18 is swept by the sweep pad 28. Such sweeping action may thus contribute to the removal of any undesired residue and/or dust, etc..., which may deposit on the outer surface 24. A reduction in residues and/or dust on the discs during forming helps reducing the creation of cosmetic defects and/or of cracks on the blanks 16, which further contributes to reducing the risk of breakage of the glass blanks 16, and/or of breakage of the final glass containers made from the blanks 16 during subsequent stages of the container's life cycle, i.e. even during transport, storage, or use.

Moreover, the friction, which is generated due to the contact between the sweep pad 28 and the outer surface 24 of the support rollers 18, may be a factor contributing to a reduction of any potential vibration of the support rollers 18.

Also, it has been noted by the inventors that, surprisingly, the sweeping action may also contribute to a reduction of the surface temperature of the support rollers 18, i.e. a reduction of the temperature of the outer surface 24 of the support rollers 18 that is swept by the sweep pad 28. At those support stations which are the most exposed to heat in the forming process, such temperature reduction has been found to be up to 5 to 30 degrees Celsius, frequently in the range of 10 to 20 degrees Celsius, from a temperature of the outer surface 24 of the support rollers 18 which, without the presence of a sweep pad, would normally be in the range of 280 to 380 degrees Celsius. This temperature reduction reduces the risk of the supports rollers marking the blanks 16.

Preferably, at least a top surface of the sweep pad 28, i.e. that surface of the sweep pad 28 being directly in contact with the support rollers 18, is indeed made of a textile. Several tests have been conducted by the applicant which have shown that a cotton fabric is a desirable material for forming such top surface of the sweep pad 28. Such cotton fabric has shown to exhibit a good compromise between the capacity to effectively sweep the outer surface of the support rollers 18 to effectively remove any possible contaminants such as residues or dust, while at the same time exhibiting a good resistance to wear under the effect of friction of the support roller 18 on the sweep pad 28, and also resisting to the high temperature environment which may be encountered in a glass forming machine. To further improve such resistance to a high-temperature environment, it has been found that the cotton fabric forming at least the top surface of the sweep pad 28 may advantageously be treated for increasing its heat resistance. For example, the cotton fabric may be improved by a fire retardant treatment. Known fire-retardant treatments may be applied to the cotton fabric or to the cotton fibers before they are made into the fabric.

In order to optimize the resistance to deformation which may occur due to the friction on the support rollers 18, the cotton fabric forming at least the top surface of the sweep pad 28 is preferably a woven fabric rather than for example a knitted or braided fabric. Various tests have shown that tight weave pattern provides better results in terms of resistance to friction and also in terms of heat resistance.

Testing has also shown that a sweep pad 28 may advantageously comprise several superposed layers of textile fabric, including a top layer as discussed above. For example, the sweep pad may comprise several superposed layers of textile fabric. Optionally, the several superposed layers of textile fabric may be joined together along at least part of the periphery of the sweep pad 28, while the several superposed layers of textile fabric may for example be non-bound one to the other in a central area of the textile fabric layers where contact with the support rollers is to occur. The joinder of the superposed layers of textile fabric may be performed via stitching, gluing, and/or stapling, etc.... Such construction of a multilayer sweep pad 28 is believed to be advantageous because of the compressibility imparted by the stacking of layers where contact with the roller discs 18 is to occur. Such compressibility brought by a multilayer construction allows for better tolerance to the exact positioning of the support pad on the machine 10 and for better tolerance to the ageing of the sweet pad 28.

In some embodiments, the sweep pad 28 comprises several superposed layers of textile fabric, for example 3 to 20 superposed layers, preferably 5 to 15 layers of textile fabric. In some embodiments, the sweep pad 28 comprises several identical superposed layers of textile fabric. In some embodiments, the sweep pad 28 comprises several identical superposed layers of fire-retardant treated cotton woven fabric. In some embodiments the sweep pad is composed only of several identical superposed layers of fire-retardant treated cotton woven fabric.

All in all, the sweep pad 28 may comprise several identical superposed layers of fire-retardant treated cotton woven fabric and may exhibit a load-free thickness in the range of 2 to 8 mm, preferably in the range of 3 to 6 mm. Such load-free thickness can be evaluated by observing the cross-section of the sweep pad through a microscope or a camera.

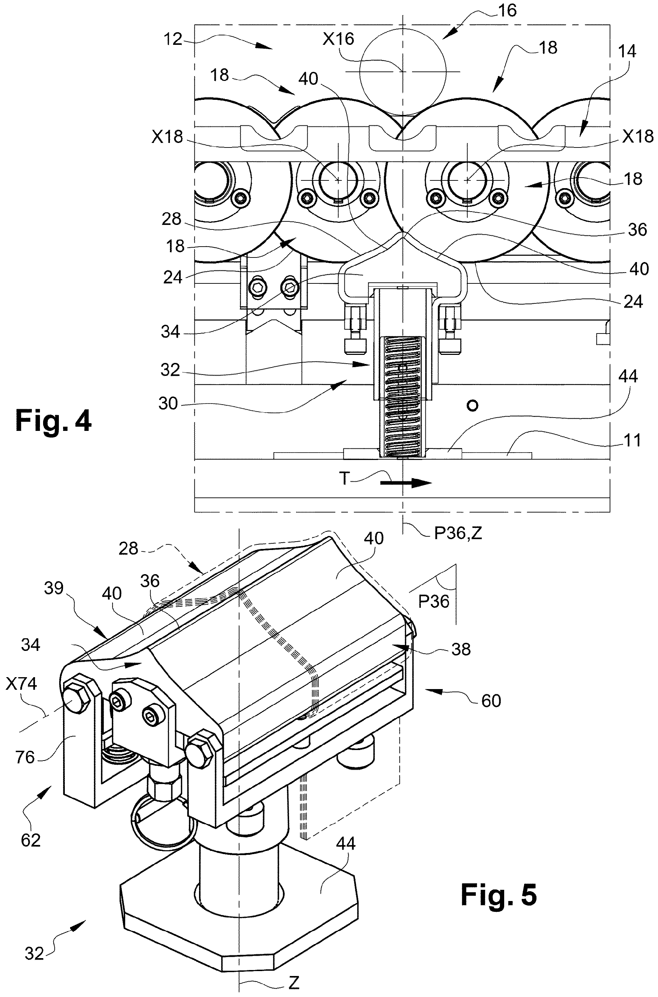

As visible especially in Figure 4, the sweep pad 28 simultaneously contacts the two support rollers 18 of a blank support station 12, on a bottom side of the axis plane P18.

Preferably, the sweep pad 28 extends, along the longitudinal direction of the support rollers 18, along the entire length of contact of the supports rollers 18 with a tubular glass blank 16.

Preferably, the sweep pad 28 is a part of a roller sweep 30 for a glass forming machine, wherein the roller sweep 30 comprises said textile sweep pad 28 and further comprises a sweep pad support 32. In a preferred roller sweep 30, the sweep pad 28 is attached to the sweep pad support 32 in such a way that, when the roller sweep 30 is mounted on the machine 10 at or near a given blank support station 12, the sweep pad 28 simultaneously contacts the two rollers discs 18 of said given blank support station 12, on a bottom side of the axis plane P18.

As will be apparent hereunder, the sweep pad support 32 may advantageously comprise a wedge 34 having an upper apex ridge 36 extending along a longitudinal direction in a median longitudinal plane P36 of the wedge 34. In use, the sweep pad 28 is attached to the sweep pad support 32 such that it straddles the wedge 34 on both sides of the upper apex ridge 36, and the roller sweep 30 is mounted on the machine 10 at or near a given blank support station 12 in such a way that the sweep pad 28 simultaneously contacts the two rollers discs 18 of said given blank support station 12, on a bottom side of the axis plane P18. The upper apex ridge 36 may exhibit, in a profile perpendicularly to its longitudinal direction, an acute angle, or may be flattened or rounded.

The roller sweep 30 may indeed be positioned on the machine 10 in such a way that the upper apex ridge 36 of the wedge 34 is inserted in an inverted V-shape-profile space between the two support rollers 18, said inverted V-shape-profile space being symmetric, with respect to the axis plan P18, to the V-shape-profile space where the tubular glass blank 16 is received. The median longitudinal plane P36 of the wedge 34 is preferably perpendicular to the axis plane P18 of the blank support station 12. Preferably, the median longitudinal plane P36 of the wedge 34 is positioned such that it contains the axis X16 of a tubular glass blank 16 supported by the two parallel support rollers 18 of the blank support station 12. Preferably, the wedge 34 of the sweep pad support 32 extends along the longitudinal direction of the support rollers 18, and faces the entire length of contact of the supports rollers 18 with a tubular glass blank 16.

The wedge 34 of the sweep pad support 32 further comprises two lower longitudinal side edges 38, 39 which extend parallel to the upper apex ridge 36, each on one side of the median longitudinal plane P36. The wedge 34 therefore exhibits an inverted V-shape-profile which is substantially complementary to the profile of the inverted V-shape-profile space between the bottom side of the two parallel support rollers 18. The inverted V-shape-profile of the wedge 34 has its apex directed upwards towards the axis plane P18, on the bottom side thereof, and the two lower longitudinal side edge 38, 39 are located away from the axis plane P18 with respect to the upper apex ridge 36. In other words, the two lower side edges 38, 39 are spaced apart from the upper apex ridge 36 along a principal extension direction Z of the sweep pad support 32, and they are spaced apart from each other along a transvers direction perpendicular to median longitudinal plane P36, one on each side thereof.

Extending each on one side of the upper apex ridge 36, i.e. each on one side of the median longitudinal plane P36, between the upper apex ridge 36 and a respective one of the lower side edges 38, 39, the wedge 34 may have side panels 40 forming a top surface of the wedge 34, where such top surface has an inverted V-shape-profile in any plane perpendicular to the longitudinal direction of the upper apex ridge 36. Each of the side panel 40 may be flat. However, in the example embodiment as shown on the figures, the wedge 34 comprises two concave side panels 40 extending each on one side of the upper apex ridge 36, i.e. each on one side of the median longitudinal plane P36, between the upper apex ridge 36 and a respective one of the lower side edges 38, 39. Thereby, the inverted V-shape-profile of the top surface of the wedge 34 has concave sides. Preferably, each of said concave side panels 40 exhibits a ruled surface, with all its generatrices extending parallel to the longitudinal direction of the upper apex ridge 36. For example, each concave side panel 40 may exhibit a section which extends along an angular portion of a circular cylinder, the axis of which being away from the wedge 34 in a top facing direction.

The inverted V-shape-profile of the top surface of the wedge 34 may exhibit a general angle defined as the acute angle between a first theoretical plane tangent to wedge 34 on one side of the upper apex ridge 36 and second theoretical plane tangent to wedge 34 on the other side of the upper apex ridge 36. The first theoretical plane contacts the wedge 34 at or near the upper apex ridge 36 and at or near the first lower side edge 38. The second theoretical plane contacts the wedge 34 at or near the upper apex ridge 36 and at or near the second lower side edge 39. Said general angle being in the range of 60 to 150 degrees of angle, preferably in the rage of 90 to 135 degrees of angle.

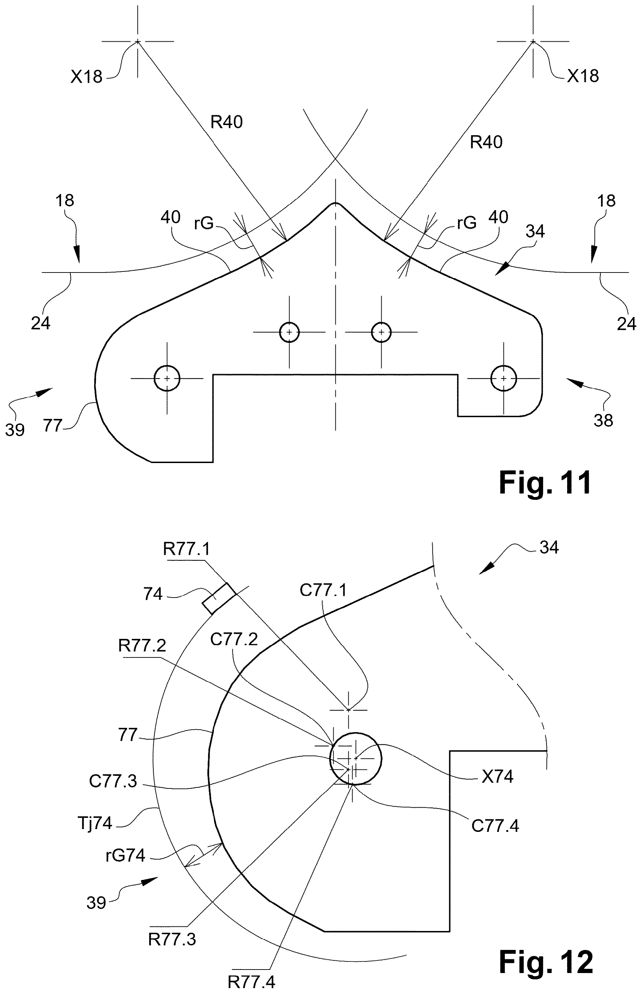

In use, the sweep pad support 32 may be positioned on the machine 10 in such a way that each of said concave side panels 40 faces a respective one of the two support rollers 18, on a bottom side thereof with respect to the axis plane P18. Preferably, where each of said side panels 40 exhibits a ruled surface, all its generatrices extend parallel to the corresponding roller axis X18. The profile of the concave side panels 40 is preferably complementary to the facing portion of the outer surface 24 of the corresponding support roller 18. For example, as more particularly visible in Figure 11, the concave side panels 40 may exhibit a section which extends along to an angular portion of a circular cylinder the axis of which corresponds to the axis X18 of the corresponding support roller 18. The radius R40 of the circular cylinder surface portion of the concave side panels 40 may be substantially equal to the radius of the corresponding support roller 18, plus a radial gap rG, the radial gap rG being preferably smaller than the load-free thickness of the support pad 28. In such a case, the sweep pad support 32 may be positioned on the machine 10 in such a way that the axis of the circular cylindrical portions of the concave side panels 40 are coincident with the roller axis X18 of the corresponding support roller 18, as shown as an example on Figure 11.

As will be detailed hereunder, the sweep pad support 30 comprises pad fasteners 60, 62 for attaching a sweep pad 28 straddling the wedge 34 on both sides of the upper apex ridge 36.

Preferably, the sweep pad 28 is flexible enough to wrap around the wedge, including wrapping around the upper apex ridge 36 and along the side panels 40, when attached to wedge 34 by the pad fasteners 60, 62. This may in particular be the case when the sweep pad 28 comprises, or consists of, several superposed layers of textile fabric. However, the sweep pad 28 may be preformed to a shape equivalent to, or approximating, the shape of the top surface of the wedge 34.

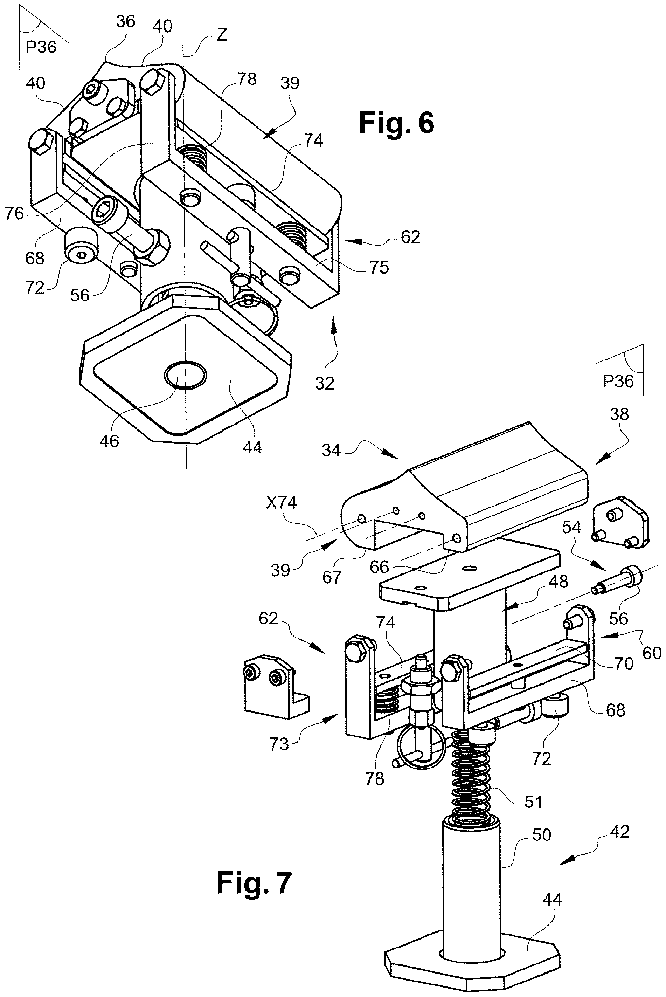

In the exemplary embodiment of the figures, the sweep pad support 32 comprises a base 42 which comprises a mount portion 44 for rigidly securing the sweep pad support 32 to the glass forming machine 10. The mount portion 44 may for example be rigidly secured to a chassis element 11 of the machine 10, which is preferably located underneath the blank support station 12. Thereby, the roller sweep 30 may be rigidly secured to the chassis member 11 of the glass forming machine 10. For example, as visible in Figure 6, the mount portion 44 may comprise a magnet 46 for rigidly securing the sweep pad support to a glass forming machine. Advantageously, such a magnet 46 allows for a dismountable connection of the sweep pad 30 on the machine 10.

In some cases, such a magnet 46 allows for a dismountable rigid connection of the roller sweep 30 on the machine 10, i.e. a connection where the operator of the machine may easily install the roller sweep 30 on the machine, and easily uninstall the roller sweep 30 from the machine. For example, the operator may choose which blank support station 12 is to be equipped with a roller sweep 30, and/or easily install or uninstall the roller sweep. The exact position of the roller sweep 30 with the respect to the support rollers 18 of a given blank support station 12 may be directed by indexing means provided on the machine. The indexing means may comprise visual markings on the machine 10. The indexing means may comprise complementary geometrical features on the machine 10 and on the roller sweep 30 to physically determine the relative positioning of the roller sweep 30 on the machine. In the example, as visible e.g. on Figure 4, the machine element 11 to which the sweep roller 30 is to be connected may comprise, for a given blank support station 12, a recess having a shape complementary to that of the mount portion 44 of the sweep pad support 32, so that the mount portion 44 may be inserted in the recess and thus be located at a predetermined position on the machine 10. The indexing means thus define a predetermined relative position of the wedge 34 with respect to the support rollers 18, thereby allowing to optimize the contact of the sweep pad 28 with the support rollers 18.

In the exemplary embodiment of the figures, extending the wedge 34 is moveably connected to the base 42 so as to be moveable with respect to the base 42 along at least a principal extension direction Z perpendicular to the longitudinal direction of the upper apex ridge 36 in the longitudinal median plane P36. In some embodiments, such as the depicted embodiment, the wedge 34 is spring biased away from the base 42 towards an extended position along the principal extension direction Z. In the example, the wedge 34 is connected to the base 42 by a slide connection along the principal extension direction Z. The slide connection may comprise, as in the depicted example, a tubular column 50 of the base 42 which extends upwardly from mount portion 44 along the principal extension direction Z, and which is slidingly received in, or which slidingly receives, a tubular pillar 48 which is rigidly attached to the wedge 34, also extending along the principal extension direction Z. In the example, the tubular pillar 48 and the wedge 34 are made of two separate parts which are rigidly connected one to the other. However, the tubular pillar 48 and the wedge 34 could be integral one with the other, i.e. made of one single part.

In the example, a helical compression spring 51, along the principal extension direction Z, is received within the tubular pillar 48 and within the tubular column 50 of the base 42 so as to bias the wedge 34 away from the base 42 towards its extended position along the principal extension direction Z. In the example, the extended position of the wedge with respect to the base is determined by a stop 54. The stop 54 comprises a screw 56 which is screwed perpendicularly through the tubular pillar 48 and which extends through an elongated window 58 in the tubular column 50, one end of the elongated window 58 forming an abutment for the screw 56 along the principal extension direction Z, thus determining the extended position of the wedge 34 away from the base 42.

Preferably, as shown in Figure 11, in the extended position of the wedge 34 with respect to the base 42 of the roller sweep 30, a radial gap rG is maintained between the concave side panels 40 of the wedge 34 and the support rollers 18 of the blank support station 12, the radial gap rG being less than a load-free thickness of the sweep pad 28. On the other hand, when mounting or dismounting the roller sweep 30, the moveable connection of the wedge 34 to the base 42 may allow an operator to temporarily reduce the total height of the roller sweep along the principal extension direction Z, by compressing the wedge 34 towards the base 42, thereby facilitating mounting or dismounting the roller sweep 30 to or from its location on the machine 10, under a given blank support station 12.

In the example, a sweep 28 may have, before being straddled over the wedge 34, a rectangular shape having a longitudinal dimension and a transverse direction. The longitudinal dimension is preferably at least equal to the longitudinal extent of the outer surface 24 of the support rollers 18, for example least equal to the longitudinal extent of the upper apex ridge 36 of the wedge 34. The transverse dimension is preferably at least enough from the sweep pad 28 to wrap around the wedge 34, including wrapping around the around the upper apex ridge 36 and around the two lower side edges 38, 39 of the wedge 34.

In the shown example, the sweep pad support 32 comprise a first pad fastener 60 for attaching the sweep pad 28 at a first one 38 of the two lower side edges of the wedge 34, and a second pad fastener 62 for attaching the sweep pad 28 at a second one 39 of the two lower side edges of the wedge 34.

In the example the pad fasteners 60, 62 comprise at least one tensioning pad fastener 62 for tensioning the sweep pad 28 around the upper apex ridge 36 and around the two lower side edges 38, 39 of the wedge 34.

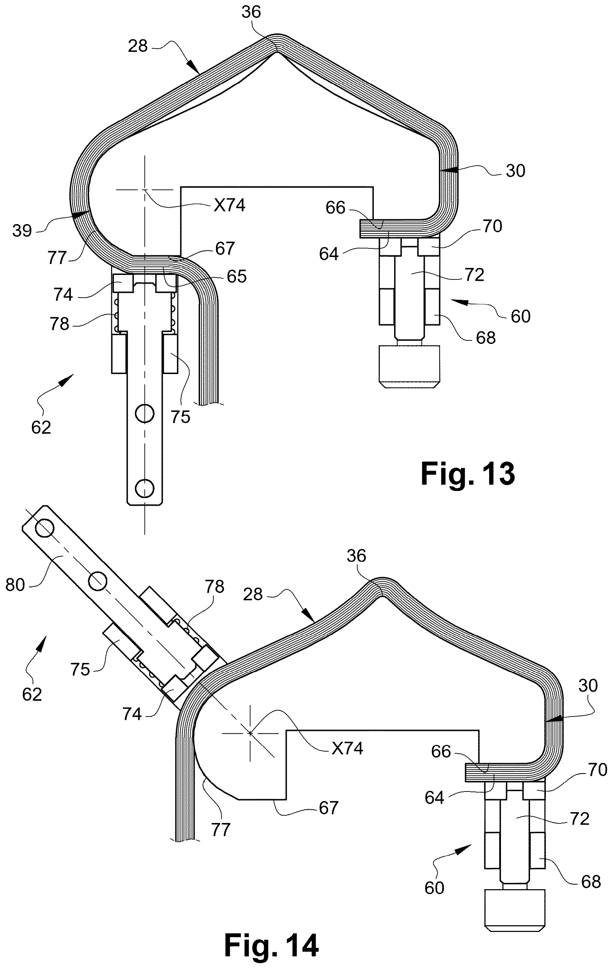

In the example, the first one of the pad fasteners is a static pad fastener 60 for statically securing a first lateral edge 64 of the sweep pad 28 on the wedge. In the example, as shown in Figures 13 to 16, the first lateral edge 64 of the sweep pad 28 is tucked under the first lower side edge 38 of the wedge 34, and the static pad fastener 60 firmly presses the first lateral edge 64 of the sweep pad 28 against the lower surface 66 of the first lower side edge 38 of the wedge 34. For example, the static pad fastener 60 may comprise a frame member which extends vertically under the first lower side edge 38. The frame member comprises a longitudinal rail 68 facing the lower surface 66 of the first lower side edge. The static pad fastener 60 comprises a presser pad 70, here in the form of a rigid bar which extends longitudinally, between the lower rail 68 and that the lower surface 66 of the first lower side edge 38, and which may be pressed in direction of the lower surface 66 of the first lower side edge 38 by a presser screw 72 threaded perpendicularly through the longitudinal rail 68. The first lateral edge 64 of the sweep pad 28 may thus be pressed and pinched between the presser pad 70 and the lower surface 66 of the first lower side edge 38 of the wedge 34.

On the other side of the wedge 34 with respect to the median longitudinal plane P36 of the wedge 34, the tensioning pad fastener 62 is configured for securing a second lateral edge 65 of the sweep pad 28 on the wedge 34. In the example, the tensioning pad fastener 62 comprises a presser pad 74, here in the form of a rigid bar which extends longitudinally and which is rotatable with respect to the wedge 34 around a longitudinal presser pad rotation axis X74, externally around the second 39 of the two lower side edges of the wedge 34. The presser pad 74 may be carried by a rotatable frame member 73 comprising a longitudinal rail 75.

In the example, the second lateral edge 65 of the sweep pad 28, opposite of the first lateral edge 64 of the sweep pad 28, is tucked under the second lower side edge 39 of the wedge 34, and, in an end position as shown on Figure 13, the tensioning pad fastener 62 firmly presses the second lateral edge 65 of the sweep pad 28 against a lower surface 67 of the first lower side edge 38 of the wedge 34.

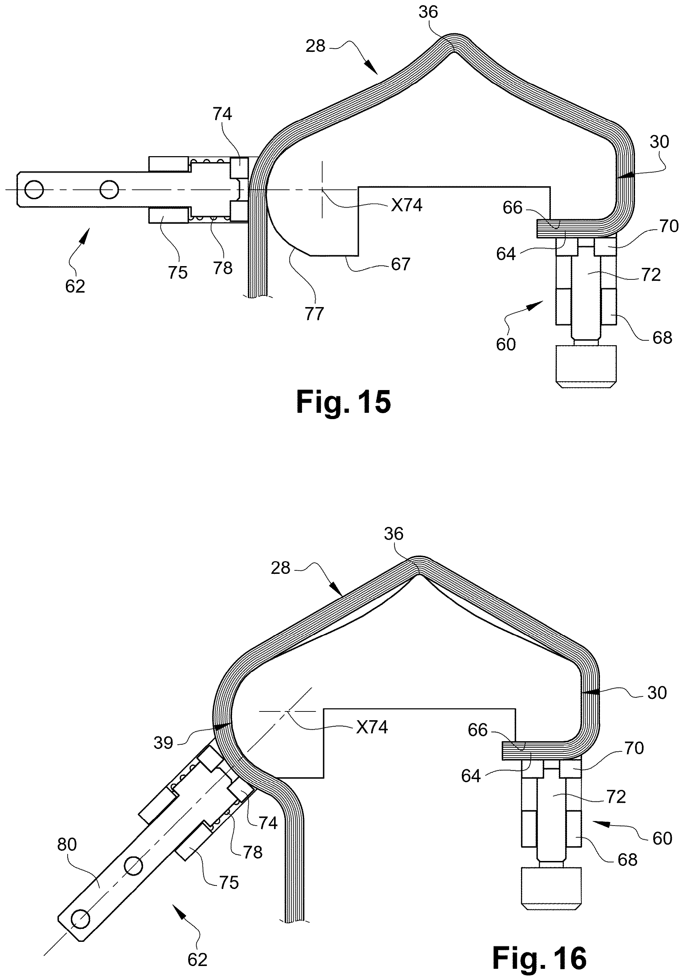

In this example, the rotating frame member 73 comprises, on both ends of the rotating longitudinal rail 75, a connecting branch 76, perpendicular to the rotating longitudinal rail 75, by which the rotatable frame member 73, including the presser pad 74 and the rotating longitudinal rail 75, is rotatably mounted on the wedge 34 around the presser pad rotation axis X 74. The rotatable frame member 73, and thus the rotating presser pad 74, may rotate around the presser pad rotation axis X 74 from a start position illustrated at Figure 14, to an end position illustrated at Figure 13, with at least two intermediate positions illustrated respectively at Figures 15 and 16.

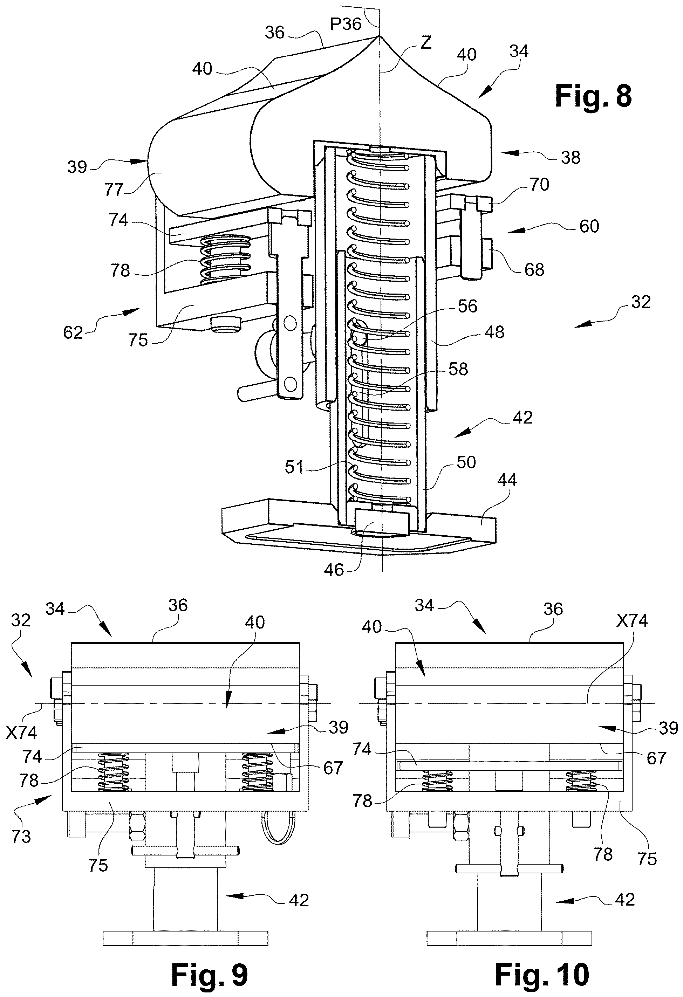

The rotating presser pad 74 of the tensioning pad fastener 62 extends longitudinally between the longitudinal rotating rail 75 of the rotatable frame member and a side surface 77 of the second lower side edge 39. The rotating presser pad 74 may be pressed first in the direction of the side surface 77 and then in direction of the lower surface 66 of the second lower side edge 39 by a spring 78. In the example, the spring 78 comprises two helical compression springs which are interposed, radially with respect to the presser pad rotation axis X 74, between the longitudinal rotating rail 75 and the rotating presser pad 74. Figure 9 shows a rest position of the rotating presser pad 74 with respect to the longitudinal rotating rail 75, position where the rotating presser pad 74 is pressed away from the longitudinal rotating rail 75 in a radial direction with respect to the presser pad rotation axis X 74 by the spring 78, towards the rounded external surface 77 of the second lower side edge 39. Figure 10 shows a retracted position of the rotating presser pad 74 with respect to the longitudinal rotating rail 75, position towards which the rotating presser pad 74 may be pulled towards the longitudinal rotating rail 75 in a radial direction with respect to the presser pad rotation axis X 74, with a corresponding compression of the spring 78, away from the rounded external surface 77 of the second lower side edge 39. In the end position of Figure 13, the second lateral edge 65 of the sweep pad 28 is thus pressed and pinched between the presser pad 74 and the lower surface 67 of the second lower side edge 39 of the wedge 34.

When rotating, the rotating presser pad 74 rotates around the second lower side edge 39 of the wedge 34 which exhibits a rounded external surface 77 having a convex curved cross-section around the longitudinal rotation axis X 74, said convex curved cross-section terminating into the lower surface 67 of the second lower side edge 39.

As more clearly illustrated in the detailed representation of Figure 12, the convex curved cross-section of the rounded external surface 77 of the second lower side edge 39 of the wedge 34 is off-centered with respect to the longitudinal presser pad rotation axis X 74 of the rotating presser pad 74, defining a diminishing radial gap between the rotating presser pad 74 and the rounded external surface 77 of the second lower side edge 39 of the wedge 34 when the rotating presser pad 74 rotates from the start position to the end position around the presser pad rotation axis X 74.

In the example shown on the figures, more particularly on Figure 12, the rounded external surface 77 of the second lower side edge 39 of the wedge 34 is a non-circular cylindrical surface, having an a evolutive radius of curvature (R77.1, R77.2, R77.3, R77.4), around a shifting center of curvature (C77,1, C77.2, C77,3, C77.4), when considered around the presser pad rotation axis X 74, which defines a diminishing radial gap rG74 between the rounded external surface 77 and the trajectory Tj74 of the rotating presser pad 74 (the trajectory Tj74 of the rotating presser pad 74 being that of the rotating presser pad 74 when rotating around it rotation axis X74 while being maintained in the rest position of Figure 9 with respect to the longitudinal rail 75, not accounting for a possible retraction, radially towards the exterior with respect to its rotation axis X74, due e.g. to an interaction with the sweep pad 28).

In the initial position of the rotating presser pad 74, such as shown for example on Figure 14, this radial gap rG 74 may be superior to the non-loaded thickness of the sweep pad 28. Thereby, the second lateral edge 65 of the sweep pad 28 may be inserted between the second lower side edge 39 of the wedge 34, and the rotating presser pad 74. A pull rod 80 may be provided to temporarily further increase the radial gap rG74 for facilitating the insertions of the second lateral edge 65 of the sweep pad 28 therebetween, by allowing an operator to displace radially the rotating presser pad 74 towards the exterior, against the action of spring 78.

When the rotating presser pad 74 is rotated, in the example together with rotating frame member 73, towards its end position, the radial gap rG74 diminishes such that, for example at the first intermediate positions shown at Figure 15, the rotating presser pad enters into contact and starts pressing radially the second lateral edge 65 of the sweep pad 28 against the rounded external surface 77 of the second lower side edge 39. When rotation continues, the contact pressure, exerted substantially radially with respect to the presser pad rotation axis X 74, causes a radial compression of the sweep pad 28, correlated to a compression of the presser spring 78 which acts on the rotating presser pad 74. However, despite an increasing pressure along the radial direction with respect to pressure pad rotation axis X74, the rotation of the presser pad 74 continues around that axis. Due to the friction between the rotating presser pad 74 and the second lateral edge 65 of the sweep pad 28, the sweep pad 28 is tensioned around the wedge 34, i.e. around the upper apex ridge 36 and around both of the lower side edges 38, 39 of the wedge 34. When the rotating presser pad 74 reaches its final position shown in Figure 13, the spring 78 maintains sufficient pressure on the second lateral edge 65 of the sweep pad 28 so that it is securely pinched between the rotating presser pad 74 and the lower surface 67 of the second lower side edge 39 of the wedge 34.

Thanks to the tensioning pad fastener 62, the sweep pad 28 is easily secured and tensioned around the wedge 34.

As illustrated schematically on Figure 13, when the sweep pad 28 is properly tensioned on the wedge 30 which has concave side panels 40 as described above, a gap may be formed the between the tensioned sweep pad 28 and each of said concave side panels 40, perpendicularly to said concave side panels 40, at least before the sweep pad 28 contacts the support rollers 18. When the sweep pad 28 is brought into contact with the support rollers 18, a certain amount of stretching and/or deformation of the sweep pad 28 may occur, which is permitted by said gap, and which allows for a greater area of contact between the support rollers and the sweep pad 28, the sweep pad 28 partially wrapping around the respective support roller 18.

It has been determined that a sweep pad 28, and also a sweep roller 30 as described herein, can be provided at only certain blank support stations 12 of the series of blank support stations of a given machine, rather than at every blank support station 12. Indeed, some blank support stations may be more prone to the undesirable conditions which are remedied at least in part by a sweep roller as described herein.

## Claims

1. Sweep pad support (32) for a roller sweep (30) for a glass forming machine (10), wherein the sweep pad support (32) comprises a wedge (34) having an upper apex ridge (36) extending along a longitudinal direction in a median longitudinal plane (P36) of the wedge (34), wherein the wedge (32) further comprises two lower longitudinal side edges (38, 39) which extend parallel to the upper apex ridge (36), each on one side of median longitudinal plane (P36), and wherein the sweep pad support (32) comprises pad fasteners (60, 62) for attaching a sweep pad (28) straddling the wedge (34) on both sides of the upper apex ridge (36).

2. Sweep pad support (32) according to claim 1, wherein the two lower side edges (38, 39) of the wedge (34) are spaced apart from the upper apex ridge (36) along a principal extension direction (Z) and spaced apart from each other along a transvers direction perpendicular to median longitudinal plane (P36).

3. Sweep pad support (32) according to any of claims 1 or 2, wherein the wedge (34) comprises two concave side panels (40) extending each between the upper apex ridge (36) and a respective one of the lower side edges (38, 39).

4. Sweep pad support (32) according to claim 3, wherein the two side panels (40) form a top surface of the wedge (34), where such top surface has an inverted V-shape-profile in any plane perpendicular to the longitudinal direction of the upper apex ridge (36), wherein the inverted V-shape-profile of the top surface of the wedge 34 has concave sides formed by the two side panels (40), wherein each of said concave side panels (40) exhibits a ruled surface, with all its generatrices extending parallel to the longitudinal direction of the upper apex ridge (36).

5. Sweep pad support (32) according to any of claims 3 or 4, wherein each concave side panel (40) exhibits, perpendicularly to its generatrices, a section which extends along an angular portion of a circular cylinder, the axis of which being away from the wedge (34) in a top facing direction.

6. Sweep pad support (32) according to any of the preceding claims, wherein the pad fasteners (60, 62) comprise a first pad fastener (60) for attaching the sweep pad (28) at a first one (38) of the two lower side edges of the wedge (34), and a second pad fastener (62) for attaching the sweep pad (28) at a second one (39) of the two lower side edges of the wedge (34).

7. Sweep pad support (32) according to any of the preceding claims, wherein the pad fasteners comprise at least one tensioning pad fastener (62) for tensioning the sweep pad (28) around the upper apex ridge (36) and around the two lower side edges (38, 39) of the wedge (34).

8. Sweep pad support (32) according to claim 7, wherein the tensioning pad fastener (62) comprises a rotating presser pad (74), which is rotatable with respect to the wedge (34) around a longitudinal rotation axis (X74), externally around a corresponding one (39) of the two lower side edges of the wedge (34) which exhibits a rounded external surface (77) having a convex curved cross-section around the longitudinal rotation axis (X74).

9. Sweep pad support (32) according to claim 8, wherein the convex curved cross-section of the rounded external surface (77) of the corresponding one (39) of the two lower side edges of the wedge (34) is off-centered with respect to the longitudinal rotation axis (X74) of the rotating presser pad (74), defining a diminishing radial gap (rG74) between the rotating presser pad (74) and the rounded external surface (77) of the corresponding one (39) of the two lower side edges of the wedge (34) when the rotating presser pad (74) rotates from a start position to an end position, and wherein the rounded external surface (77) of the corresponding one (30) of the two lower side edges of the wedge (34) may be a circular or non-circular cylindrical surface.

10. Sweep pad support according to any preceding claim, wherein the sweep pad support (32) comprises a base (42), wherein the wedge (34) is moveably connected to the base (42) so as to be moveable with respect to the base (42) along at least a principal extension direction (Z) perpendicular to the longitudinal direction in the median plane (P36), and wherein the wedge (34) is spring (51) biased away from the base (42) towards an extended position along the principal extension direction (Z).

11. Sweep pad support according to claim 10, wherein the extended position of the wedge (34) with respect to the base (42) is determined by a stop (54).

12. Sweep pad support (32) according to any of claims 10 or 11, wherein the wedge (34) is connected to the base (42) by a slide connection (48, 50) along the principal extension direction (Z).

13. Sweep pad support (32) according to any of claims 10 to 12, wherein the base (42) comprises a mount portion (44) for rigidly securing the sweep pad support (32) to a glass forming machine (10).

14. Sweep pad support (32) according to claim 13, wherein the mount portion (44) comprises a magnet (46) for rigidly securing the sweep pad support (32) to a glass forming machine (10).

15. Roller sweep (30) for a glass forming machine (10), wherein the roller sweep comprises a sweep pad support (32) according to any of claims 1 to 14 and wherein a textile sweep pad (28) is attached to the sweep pad support (32), straddling the wedge (34) on both sides of the upper apex ridge (36), and wherein the sweep pad support (32) is configured such that the sweep pad (28) simultaneously contacts two parallel support rollers in a glass forming machine.
